# EUROPEAN PATENT SPECIFICATION

(11) **EP 3 984 684 B1**
(45) Date of publication and mention of the grant of the patent: **23.04.2025**
(21) Application number: 20826870.6
(22) Date of filing: 17.06.2020
(51) Int. Cl.: B23K 20/12, B60R 19/04, B62D 25/00

(54) **BONDED JOINT, AND MEMBER FOR AUTOMOBILE**
GEKLEBTE VERBINDUNG UND ELEMENT FÜR EIN KRAFTFAHRZEUG
JOINT COLLÉ ET ÉLÉMENT POUR AUTOMOBILE

(30) Priority: 17.06.2019 JP 2019112000; 28.01.2020 JP 2020011621
(43) Date of publication of application: 20.04.2022
(73) Proprietor: NIPPON STEEL CORPORATION, Chiyoda-ku Tokyo 100-8071 (JP)
(72) Inventor: MATSUI, Sho, Tokyo 100-8071 (JP); KODAMA, Shinji, Tokyo 100-8071 (JP); YOSHINAGA, Chisato, Tokyo 100-8071 (JP)
(74) Representative: Vossius & Partner Patentanwälte Rechtsanwälte mbB
(86) International application number: PCT/JP2020/023839
(87) International publication number: WO 2020/256031

(56) References cited:
- WO-A1-2017/022184
- WO-A1-2017/110531
- WO-A1-2017/110531
- JP-A- 2011 062 748
- JP-A- 2012 041 601
- JP-A- 2012 509 178
- SBALCHIERO JEFERSON ANDRé ET AL: "Replacement of Gas Metal Arc Welding by Friction Welding for Joining Tubes in the Hydraulic Cylinders Industry", MATERIALS RESEARCH, vol. 21, no. 4, 4 June 2018 (2018-06-04), BR, XP055773741, ISSN: 1516-1439, Retrieved from the Internet <URL:https://www.scielo.br/pdf/mr/v21n4/1516-1439-mr-24-01-e20180015.pdf> DOI: 10.1590/1980-5373-mr-2018-0015
- SBALCHIERO, JEFERSON ANDRE, MARTINAZZI DOUGLAS, LEMOS GUILHERME VIEIRA BRAGA, REGULY AFONSO, RAMOS FABIANO DORNELLES: "Replacement of Gas Metal Arc Welding by Friction Welding for Joining Tubes in the Hydraulic Cylinders Industry", MAT. RES., vol. 21, no. 4, 2018, XP055773741, ISSN: 1980-5373, Retrieved from the Internet <URL:http://www.scielo.br/scielo.php?script=sci_arttex&pid=S1516-14392018000400226&lng=en&nrm=iso> [retrieved on 20200807], DOI: 10.1590/1980-5373-mr-2018-0015

## Description

### FIELD

The present invention relates to a joint jointed by friction welding and an automobile member.

### BACKGROUND

As means for joining a plurality of metal sheets, the art is known of joining a superposed plurality of metal sheets using rivets or other connecting element.

In particular, in recent years, the art of joining a superposed top sheet and bottom sheet by making a connecting element rotate while pressing it against the surface of the top sheet so as to pass it through the top sheet and thereby friction weld the connecting element and the bottom sheet has been studied.

For example, PTL 1 discloses the art of joining two sheet materials with different strengths such as an aluminum sheet and steel sheet by a process of friction welding using a rivet or other joining element (that is, a connecting element having a head part and shaft part). Specifically, the art of joining two sheet materials with different strengths through the following process is disclosed.

That is, the two sheet materials are superposed with the sheet material with the lower strength as the top sheet, a connecting element supported by a holder is set on the top surface of the top sheet, and the connecting element is made to rotate while making it move downward toward the inside part of the top sheet and press against it. At this time, rotation of the connecting element causes strong friction to occur between the connecting element and the top sheet whereby the front end part of the connecting element is heated, so the top sheet softens and it becomes possible for the connecting element to penetrate the top sheet.

If the front end part of the connecting element rotating while penetrating the top sheet reaches the top surface of the bottom sheet in this way, a process of friction welding proceeds between the shaft part of the connecting element and the bottom sheet whereby the shaft part of the connecting element and the bottom sheet are friction welded. Due to this, the connecting element and the bottom sheet are jointed at the friction welded part (jointed part) and the top sheet is fastened between the head part of the connecting element and the bottom sheet.

In "Replacement of Gas Metal Arc Welding by Friction Welding for Joining Tubes in the Hydraulic Cylinders Industry", Jeferson André Sbalchiero, Douglas Martinazzffb , Guilherme Vieira Braga Lemosb, Afonso Regulyb , Fabiano Dornelles Ramosd, Materials Research. 2018; 21(4): e20180015, a joint between parts that comprise ferrite and perlite includes acicular ferrite.

### [CITATIONS LIST]

### [PATENT LITERATURE]

[PTL 1] Japanese Unexamined Patent Publication No. 2011-62748

### SUMMARY

### [TECHNICAL PROBLEM]

Not limited to the art of this PTL 1, in a joint formed by the art of friction welding a steel rod to a steel sheet (friction stud welding) etc., there was the problem that if using a steel sheet with a particularly high carbon content (that is, high strength steel sheet), the strength of the friction welded part (jointed part) ended up falling and as a result the joint strength as a joint ended up decreasing.

Therefore, the present invention relates to a joint and automobile member comprised of a plurality of steel materials jointed by friction welding and has as its object the provision of a joint excellent in joint strength and an automobile member.

### [SOLUTION TO PROBLEM]

The inventors investigated in detail the cause by which a joint jointed by friction welding falls in joint strength. It was thought that the cause was the high difference in hardness between the soft phases (mainly ferrite phases) in the regions near a jointed part heated to a two phase temperature region (ferrite phases and austenite phases) (below, referred to as the "two phase temperature region heated parts") and the hard phases (mainly martensite phases) making the strain concentrate at the interfaces of the soft phases and the hard phases. Here, the "soft phases" indicate structures with a hardness lower than the hard phases (mainly martensite phases) at the two phase temperature region heated parts.

Further, it became clear that the structures of the two phase temperature region heated parts, in particular the shapes of the soft phases, are affected by the structures of the base material. In particular, it became clear that if the soft phases of the two phase temperature region heated parts of the joint are shaped as clumps with a small aspect ratio, the joint strength falls.

Therefore, the inventors discovered that by controlling the soft phases of the two phase temperature region heated parts formed at the jointed part to a predetermined shape (acicular shape), local strain concentration is eased and the joint strength as a joint is improved.

Furthermore, the inventors clarified by experiments that if applying stress from the outside to a joint comprised of steel materials with different sizes of the parts near the jointed part (in the case of rod-shaped steel materials, different diameters) jointed by friction welding, at the jointed part of the two steel materials, fracture starts from the jointed part of the steel material with a larger size of the part near the jointed part. Further, they discovered by experiments that if soft phases of an acicular shape (acicular soft phases) are dispersed at this portion, the joint becomes higher in joint strength and thereby completed the present invention.

The specific aspects of the present invention are as described below.

(1) A joint according to claim 1.
(2) The joint according to (1), wherein the plurality of the acicular soft phases are dispersed in the two phase temperature region heated part as a whole.
(3) The joint according to (1) or (2), wherein the structures of the parts other than the jointed part of the second steel material include one or more structures selected from bainite, tempered bainite, martensite, and tempered martensite in a total of 60% or more.
(4) The joint according to any one of (1) to (3), wherein the second steel material is a steel sheet.
(5) The joint according to (4), wherein a top surface of the second steel material being the steel sheet has at least one sheet material of a plastic sheet and a metal sheet superposed on the top surface and the first steel material is passed through the sheet material to be jointed with the second steel material by friction welding.
(6) The joint according to (5), wherein the first steel material has a head part with a larger cross-sectional diameter than a shaft part at an end part at an opposite side from the jointed part and the sheet material is gripped between the second steel material and the head part of the first steel material.
(7) The joint according to (5) or (6), wherein the joint comprises an adhesive arranged between the second steel material and the sheet material.
(8) The joint according to any one of (5) to (7), wherein the joint comprises two or more sheet materials and an adhesive arranged between the sheet materials.
(9) The joint according to any one of (5) to (8), wherein the joint comprises one or more welded parts selected from a group consisting of a spot welded part, laser welded part, and arc welded part joining the sheet material and the second steel material.
(10) The joint according to any one of (1) to (9), wherein the second steel material is a tensile strength 1180 MPa or more steel sheet.
(11) The joint according to any one of (1) to (10), wherein the acicular soft phases have an average aspect ratio of a long side and short side of 5.0 or more.
(12) An automobile member having the joint according to any one of (1) to (11).
(13) The automobile member according to (12) , wherein the automobile member is a bumper reinforcement, A pillar, B pillar, roof rail, side sill, front side member, rear side member, tunnel reinforcement, battery case, or member constituting an automobile floor.

### [ADVANTAGEOUS EFFECTS OF INVENTION]

According to the present invention, it is possible to provide a joint comprised of a plurality of steel materials jointed by friction welding which is excellent in joint strength and an automobile member using the same.

### BRIEF DESCRIPTION OF DRAWINGS

FIG. 1 is a cross-sectional view showing principal parts of a joint 10 according to one embodiment of the present invention which is comprised of a rod-shaped first steel material 1 and a rod-shaped second steel material 2 with an area of a surface to be jointed larger than the first steel material 1 which are jointed by friction welding. Note that, the three photos at the right side in FIG. 1 are electron micrographs of the metal structures of a quenched part P₁, a two phase temperature region heated part P₂, and a tempered part P₃ .
FIG. 2 is a schematic view for explaining an example of an area of a surface. to be jointed
FIG. 3 is a schematic view for explaining another example of an area of a surface to be jointed.
FIG. 4 is a schematic view for explaining a state of dispersion of a plurality of acicular soft phases at the two phase temperature region heated parts P₂ of the joint 10.
FIG. 5 is a schematic view for explaining a method of joining the rod-shaped first steel material 1 and the rod-shaped second steel material 2 by friction welding.
FIG. 6 is a cross-sectional view of a joint 10' according to another embodiment of the present invention which is comprised of a rivet-shaped first steel material 1B and a sheet-shaped second steel material 2B which are jointed by friction welding. Note that, in FIG. 6, the state of the steel material being plastically deformed near the jointed part is omitted in the illustration.
FIG. 7 is a cross-sectional view of a joint 10" according to still another embodiment of the present invention which is comprised of a rod-shaped first steel material 1 and a sheet-shaped second steel material 2B which are jointed by friction welding.

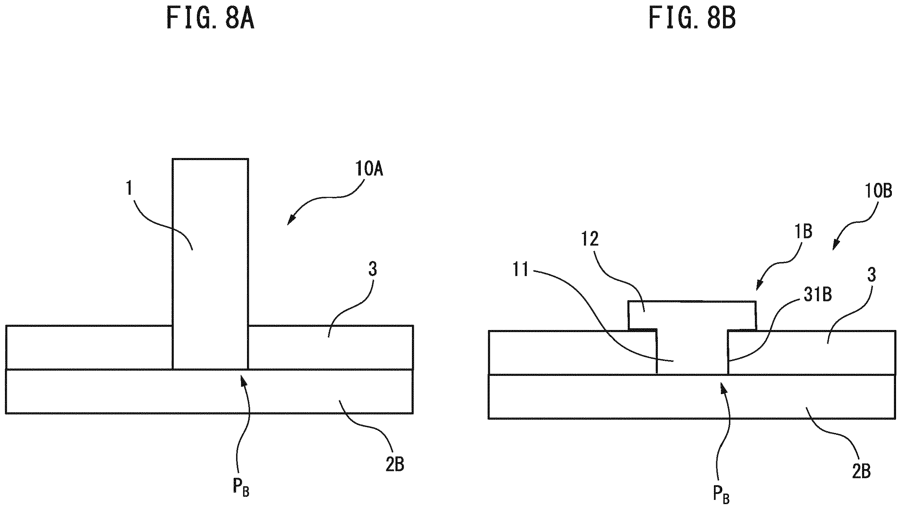

FIGS. 8A and 8B are cross-sectional views of joints 10A and 10B of still other embodiments of the present invention. FIG. 8A shows a joint 10A comprised of a rod-shaped first steel material 1 running through the sheet material 3 arranged as the top sheet and a sheet-shaped second steel material 2B arranged as a bottom sheet which are jointed by friction welding, while FIG. 8B shows a joint 10B comprised of a rivet-shaped first steel material 1B running through a through hole 31B of the sheet material 3 arranged as the top sheet and a sheet-shaped second steel material 2B arranged as a bottom sheet which are jointed by friction welding.
FIG. 9 is a cross-sectional view showing, as an example of the first steel material able to be used for the joint of the present invention, the first steel material in the case where a front end of a shaft part at the side of the surface to be jointed is a conical shape.
FIG. 10 is a cross-sectional view showing, as an example of the first steel material able to be used for the joint of the present invention, the first steel material in the case where a front end of a shaft part at the side of the surface to be jointed is a spherical shape.
FIG. 11 is a view schematically showing a bumper reinforcement of one example of the automobile member of the present invention.
FIG. 12 is a cross-sectional schematic view of a bumper reinforcement of one example of the automobile member of the present invention.
FIG. 13 is a view schematically showing a roof rail, A pillar, and B pillar of one example of the automobile member of the present invention.
FIG. 14 is a view schematically showing a B pillar of one example of the automobile member of the present invention.
FIG. 15 is a cross-sectional schematic view of a B pillar of one example of the automobile member of the present invention.
FIG. 16 is a view showing a relationship of an amount of carbon and joint strength in the embodiments.

### DESCRIPTION OF EMBODIMENTS

Below, preferred embodiments of the joint of the present invention will be explained in detail while referring to the drawings.

### Joint

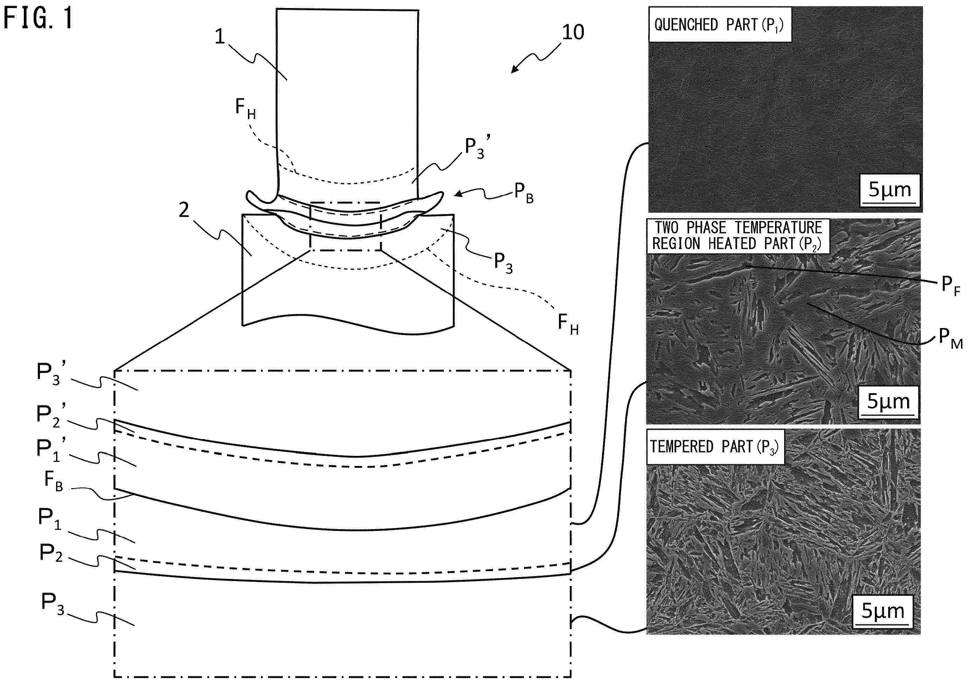

FIG. 1 is a joint 10 according to one embodiment of the present invention. This joint 10 is comprised of a rod-shaped first steel material 1 and a rod-shaped second steel material 2 with a larger area of a surface to be jointed than the first steel material 1 fayed and jointed by friction welding. Note that, as explained later, in the present invention, the first steel material and the second steel material do not have to be rod-shaped. At least one of the steel materials may be sheet-shaped.

Further, in the above-mentioned joint 10, the second steel material 2, as shown in FIG. 1, has a two phase temperature region heated part P₂ at a jointed part P_{B} with the first steel material 1. Furthermore, at this two phase temperature region heated part P₂ , a plurality of the acicular soft phases P_{F} with acicular cross-sectional shapes are dispersed. The average aspect ratio of a long side and short side of the dispersed acicular soft phases is 4.0 or more, preferably 5.0 or more.

In this way, the joint 10 of the present embodiment has a plurality of the acicular soft phases P_{F} dispersed in the two phase temperature region heated part P₂ formed at the jointed part of the second steel material 2 with an area of a surface to be jointed larger than the first steel material 1 (that is, with the larger size of the part near the jointed part), so that plurality of the acicular soft phases P_{F} causes the local strain concentration to ease and excellent joint strength to be able to be exhibited.

Here, a "two phase temperature region heated part" indicates a region heated to the two phase temperature region of ferrite phases and austenite phases. This two phase temperature region heated part can be confirmed by cutting the steel material, polishing and etching the cut surface, then examining the surface enlarged by a scanning electron microscope. Note that, if the second steel material is a steel sheet, there is a possibility of the steel sheet surface being decarburized, so this indicates a region heated to the two phase temperature region at a position inside the steel material (steel sheet) at 0.1 mm or more inside from the steel sheet surface.

Here, an area of a surface to be jointed is found in the following way.

First, if the first steel material 1 is circular columnar, at both of the first steel material 1 and second steel material 2, an "area of the surface to be jointed" is defined as the cross-sectional area at the cross-section in a direction perpendicular to the longitudinal direction of the first steel material 1 at the boundary of the location of plastic deformation due to friction welding and the location of no plastic deformation.

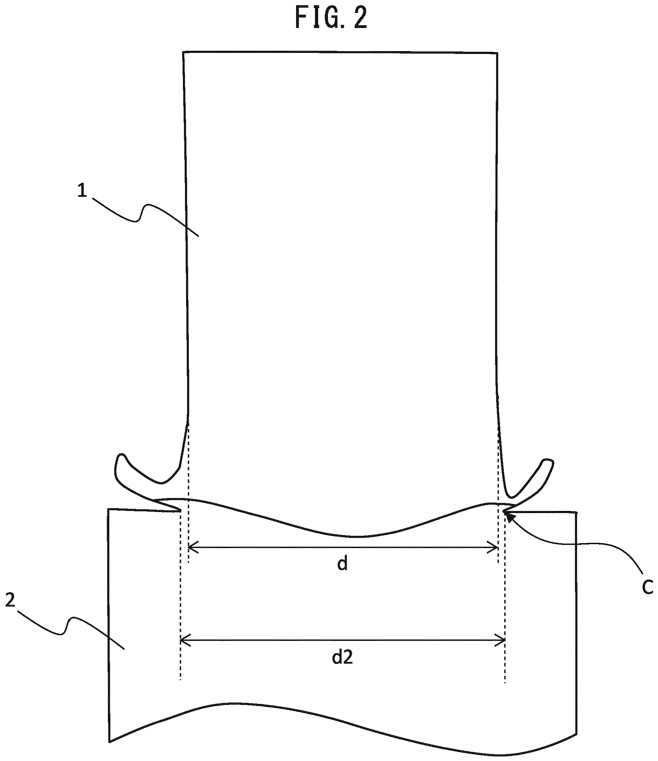

First, using FIG. 2, the case where the first steel material 1 is circular columnar and solid will be explained. FIG. 2 shows a cross-section of the first steel material 1 and second steel material 2 taken in the longitudinal direction of the first steel material 1 while passing through the center axis in the longitudinal direction of the first steel material 1. The cross-section is taken in a plane where the width at a position of 3 mm from the surface to be jointed in the longitudinal direction of the first steel material (that is, the length of the first steel material 1 in a direction perpendicular to the longitudinal direction) become maximum.

In FIG. 2, in the first steel material 1, the width at the boundary of the location of plastic deformation due to friction welding and the location of no plastic deformation is made "d" and the area of a circle having this "d" as its diameter is made the area of a surface to be jointed of the first steel material 1. Further, at the surface to be jointed of the second steel material 2, the area of a circle having the width at the boundary of the location of plastic deformation due to friction welding and the location of no plastic deformation, that is, the distance d2 between the observed end parts (C in FIG. 2), as the diameter is made the area of a surface to be jointed of the second steel material 2.

In the case of the joint shape of FIG. 2, stress concentrates at the end part of the surface to be jointed of the second steel material 2 (C in FIG. 2) and becomes a starting point of fracture of the second steel material 2.

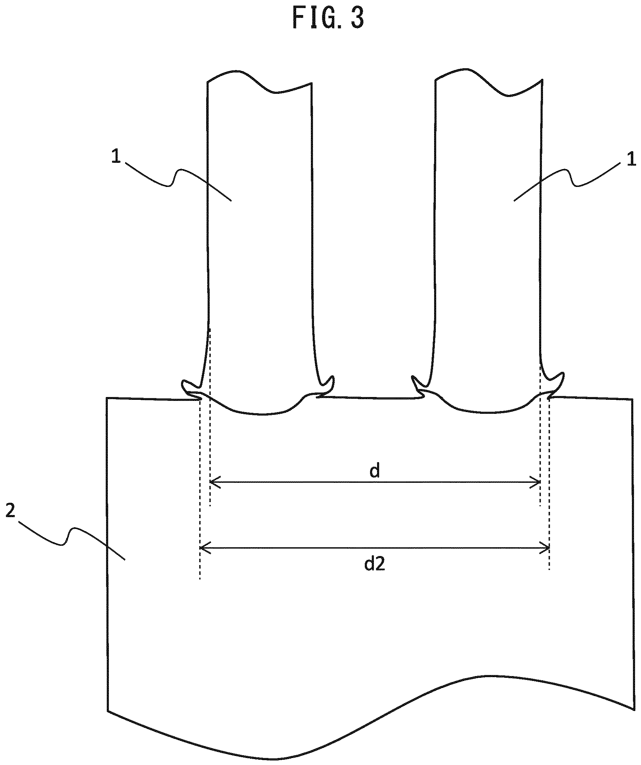

Next, using FIG. 3, the case where the first steel material 1 is circular columnar and hollow will be explained. FIG. 3, like FIG. 2, shows a cross-section of the first steel material 1 and second steel material 2 taken along the longitudinal direction of the first steel material 1 while passing through a center axis in a longitudinal direction of the first steel material 1. The cross-section taken along a plane where a width at a position of 3 mm from the surface to be jointed in the longitudinal direction of the first steel material 1 becomes maximum.

If the first steel material 1 is hollow, the width "d" and width d2 are found from the boundary of plastic deformation/no plastic deformation at the outside. That is, at the first steel material 1, the width at the outside boundary of the location of plastic deformation due to friction welding and the location of no plastic deformation is made "d". Further, at the surface to be jointed of the second steel material 2, the width at the outside boundary of the location of plastic deformation due to friction welding and the location of no plastic deformation, that is, the distance between observed end parts, is made d2. Further, the area of a circle having "d" as its diameter is made the area of a surface to be jointed of the first steel material 1, while the area of a circle having d2 as its diameter is made the area of a surface to be jointed of the second steel material 2.

Next, the case where the first steel material is a polygonal columnar shape will be explained.

If the first steel material is polygonal, the "d" observed by the direction of cross-sectioning changes. Therefore, as explained above, the cross-section taken at the plane passing through the center axis in the longitudinal direction of the first steel material where the width at the position of 3 mm from the surface to be jointed becomes maximum is observed. Further, at this cross-section, at both the first steel material and second steel material, the widths at the boundary of the location of plastic deformation due to friction welding and location of no plastic deformation are respectively made "d" and d2. If comparing the areas of circles having this "d" and d2 as diameters as areas of the surfaces to be jointed of the first steel material and second steel material, the relative magnitudes of the areas of the surfaces to be jointed can be obtained.

Next, the case where the shape of the first steel material is a shape with a cross-sectional area changing in accordance with the position in the longitudinal direction (for example, a shape having a taper toward the longitudinal direction) will be explained.

As explained above, the cross-section taken at the plane passing through the center axis in the longitudinal direction of the first steel material where the width at the position of 3 mm from the surface to be jointed becomes maximum is observed. Further, at this cross-section, at both of the first steel material and second steel material, the widths at the boundary of the location of plastic deformation due to friction welding and location of no plastic deformation are respectively made "d" and d2. If comparing the areas of circles having this "d" and d2 as diameters as areas of the surfaces to be jointed of the first steel material and second steel material, the relative magnitudes of the areas of the surfaces to be jointed can be obtained.

Note that, if the length in the longitudinal direction of the first steel material 1 is less than 3 mm, the cross-section taken at the plane where the width at a position of 2.5 mm from the surface to be jointed in the longitudinal direction of the first steel material 1 becomes maximum is observed.

Further, if the length in the longitudinal direction of the first steel material 1 is less than 2.5 mm, the cross-section taken at the plane where the width at a position of 2.0 mm from the surface to be jointed in the longitudinal direction of the first steel material 1 becomes maximum is observed. Furthermore, if the length in the longitudinal direction of the first steel material 1 is less than 2.0 mm, the cross-section taken at the plane where the width at a position of 1.5 mm from the surface to be jointed in the longitudinal direction of the first steel material 1 becomes maximum is observed.

Note that, the position at 3 mm, 2.5 mm, 2.0 mm, or 1.5 mm sometimes plastically deforms from the surface to be jointed in the longitudinal direction of the first steel material, but the amount of plastic deformation is not so great as to greatly change the width of the first steel material and causing the cross-sectioning direction to change to an unintended direction. Therefore, the cross-section where the width at the position at 3 mm, 2.5 mm, 2.0 mm, or 1.5 mm from the surface to be jointed becomes maximum is observed.

The joint of the present invention is comprised of base materials (in the Description, among the first steel material and the second steel material, indicating the parts other than the jointed part) and a jointed part (in the Description, indicating the plastically deformed parts and the heat affected zones around them of the first steel material and the second steel material).

Furthermore, the heat affected zones at the jointed part are the portions to which heat is applied to the base materials by friction welding. In the heat affected zones, the portions near the surroundings (portions adjoining base materials) are portions with a temperature of the base materials rising due to friction welding of an A_{C 1} point or less and are referred to as "tempered parts P₃ " (see FIG. 1). Such tempered parts P₃ are lower in hardness compared with the later explained quenched parts P₁ or two phase temperature region heated parts P₂ . Since such tempered parts can be present at both steel materials of the first steel material and the second steel material, in FIG. 1, the tempered part of the first steel material will be represented by P₃ '.

The adjoining parts of the tempered parts P₃ at the opposite sides to the base materials are the higher temperature heat affected zones. In this, the regions heated to a temperature of A_{C 1} to A_{C 3} , that is, the two phase temperature regions of ferrite and martensite, are the two phase temperature region heated parts P₂. The two phase temperature region heated parts P₂ , as shown in FIG. 1, are regions comprised of mainly the two phases of hard phases comprised of mainly martensite hardened by austenite transformation at the time of joining (mainly martensite phases P_{M} ) and soft phases softer than the hard phases (mainly ferrite phases P_{F} ). Note that, the two phase temperature region heated parts P₂ can include, in addition to these phases, retained austenite, tempered martensite, etc. Further, since such two phase temperature region heated parts can be present at both steel materials of the first steel material and the second steel material, in FIG. 1, the two phase temperature region heated part of the first steel material will be represented by P₂ '. However, the two phase temperature region heated part P₂ ' of this first steel material, as explained later, may also not be present depending on the composition of the first steel material etc.

Further, the adjoining parts of the two phase temperature region heated parts P₂ at the further opposite sides to the base materials are heat affected zones raised to the A_{C 3} point or more temperature due to friction welding and are referred to as "quenched parts P₁ " (see FIG. 1). Such quenched parts P₁ are regions comprised of mainly martensite and can include retained austenite etc. Further, since such quenched parts can be present at both steel materials of the first steel material and the second steel material, in FIG. 1, the quenched part of the first steel material will be represented by P₁ '.

Note that, the notations F_{H} in FIG. 1 show the friction welded interfaces. The top side of the friction welded interfaces F_{H} is the first steel material 1, while the bottom side is the second steel material 2.

Further, the quenched parts P₁ and P₁ ', the two phase temperature region heated parts P₂ and P₂ ', and the tempered parts P₃, P₃ ' can be visually confirmed by a scanning electron microscope after cutting the joint, polishing the cut surface, then etching using Nital. Note that, if the boundary surfaces F_{H} between the tempered parts P₃ and P₃ ' and the base materials are not clear, they can be identified by measuring the Vickers hardness. For example, if the base materials are martensite phases, the tempered parts P₃ and P₃ ' are tempered, so become lower in hardness. Note that, even if not able to strictly identify the boundary surfaces F_{H} between the tempered parts P₃ and P₃ ' and the base materials, there is nothing stopping working the present invention.

Further, in the above joint 10, the acicular soft phases P_{F} of the two phase temperature region heated parts P₂ are soft phases having cross-sectional shapes with an average aspect ratio (long side/short side) of 4.0 or more confirmed when cutting a jointed part P_{B} of the joint 10 along the sheet thickness direction and examining the cut surface enlarged.

Here, the aspect ratio of the cross-sectional shape of a soft phase can be calculated as the ratio (long side/short side) of the length of a long side (µm) and the length of a short side (µm) of a rectangle circumscribing the outer edge lines of that cross-sectional shape. At this time, the rectangle circumscribing the soft phase is drawn so that the length of the short sides becomes the minimum.

The specific method of calculation of the average aspect ratio of the ferrite phases (soft phases) is as follows:
First, the jointed part of the joint is cut along the sheet thickness direction. A scanning electron microscope is used to examine the structures of the cut surface enlarged. The observed field at this time is a region of an area of 20 µm×20 µm or more. It is a region with a fraction of the hard phases of 40% to 90%. The fraction of the hard phases can be found by the area ratio of the hard phases in the observed field observed in cross-section.
Next, for the soft phases observed at a region measured (that is, a two phase temperature region heated part), rectangles circumscribing the outer edge lines of the cross-sectional shape are drawn. The lengths of the long sides (µm) and the lengths of the short sides (µm) of the rectangles are respectively measured, and the ratios of the lengths (long side/short side) are calculated as the aspect ratios. At this time, the soft phases for calculation of the aspect ratios include soft phases with 1 µm or more lengths of the long sides of the rectangles circumscribing the cross-sectional shapes of the soft phases. Further, the soft phases contacting the outer edges of the observed field are not covered by the measurement.

Such calculation of the aspect ratios is performed in all of the soft phases for measurement of the aspect ratios observed in the region for measurement. The average value is made the average aspect ratio of the ferrite phases (soft phases) included in the two phase temperature region heated part. This measurement is performed for 20 or more soft phases.

Note that, if there are not 20 soft phases for measurement in the region for measurement, a similar region is again observed in the joint. A region where there are 20 or more soft phases observed is found and the above average aspect ratio is calculated in the region.

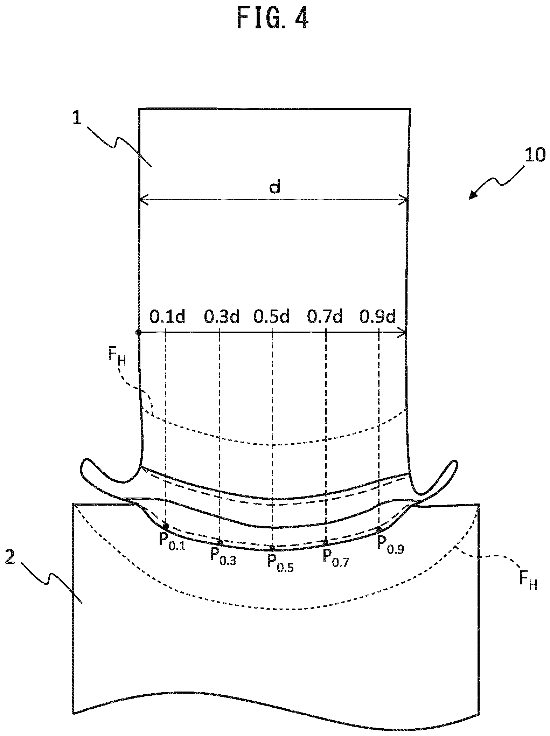

Further, in the Description, the plurality of the acicular soft phases being "dispersed" in a two phase temperature region heated part means that when calculating the above average aspect ratios at the measurement points P_{0 . 1} , P_{0 . 3} , P_{0 . 5}, P_{0 . 7} , and P_{0 . 9} of five locations in the two phase temperature region heated part P₂ on the extension lines in the axial direction of the first steel material from positions corresponding to five types of predetermined widths 0.1d, 0.3d, 0.5d, 0.7d, and 0.9d with respect to the width of the first steel material friction ("d" shown in FIG. 2 and FIG. 3) friction welded in the cross-section of the welded joint 10 shown in FIG. 4, it is possible to confirm acicular soft phases with an average aspect ratio of 4.0 or more at least at three measurement points. In particular, if able to confirm acicular soft phases with an average aspect ratio of 4.0 or more at the measurement points of all of the five locations, this means the plurality of the acicular soft phases are "dispersed" at the two phase temperature region heated part "as a whole".

Note that, in the present invention, from the viewpoint of a more excellent joint strength being obtained, the plurality of the acicular soft phases are preferably dispersed in the two phase temperature region heated part at the jointed part of the second steel material as a whole.

In the present invention, the average aspect ratio of the acicular soft phases is 4.0 or more, but is preferably 5.0 or more, more preferably 6.0 or more, still more preferably 7.0 or more. If the average aspect ratio of the acicular soft phases is 7.0 or more, an excellent joint strength can more reliably be obtained. On the other hand, while not particularly limited to this, the upper limit value of the average aspect ratio of the acicular soft phases is preferably 20.0 or more for the reason of preventing coarsening of the acicular soft phases.

Such acicular soft phases dispersed in a two phase temperature region heated part can be obtained by employing a structure including one or more structures selected from bainite, martensite, tempered bainite, and tempered martensite as the structure of the base material of the steel material. In accordance with the invention, the structure of the base material is comprised of mainly one or both of martensite and tempered martensite, and the amount of carbon is 0.27 mass% or more. It is thereby possible to obtain acicular soft phases dispersed in the two phase temperature region heated part as explained above.

The material may be a steel sheet not of these structures alone, but including two or more types of structures among the structures explained above. By using a steel sheet with a total fraction of these structures of 60% or more, it is possible to make the acicular soft phases disperse inside the two phase temperature region heated part. Therefore, in the joint after joining, the structures of the parts other than the jointed part of the second steel material preferably include in total 60% or more of one or more structures selected from bainite, tempered bainite, martensite, and tempered martensite.

The higher the total fraction of these structures, the more stably the acicular soft phases can be made to disperse, so the total fraction of these structures is preferably 70% or more, more preferably 80% or more. The upper limit of the total fraction of these structures is not particularly limited and may be 100%.

Furthermore, even if the base material structure has a distribution of structures in the sheet thickness direction or longitudinal direction of the sheet, width direction, etc. (here, "distribution" means the percentage of certain structures being large in some places and being small in some places), so long as the structure of the region heated to the two phase temperature region at the time of joining is a structure including one or more structures selected from bainite, martensite, tempered bainite, and tempered martensite, the above-mentioned acicular soft phases can be obtained.

A mainly bainite structure can be formed by heating the steel sheet to 900°C, then cooling down to a temperature enabling bainite transformation (about 400°C) and further holding at that temperature for 500 seconds, then rapidly cooling.

Further, a mainly martensite structure can be formed by heating the steel sheet to 900°C, then rapidly cooling by in-mold cooling.

A steel material may be formed with a plating layer containing at least one of Zn and Al. Further, a nonmetal film may also be formed.

As explained above, in the present invention, a two phase temperature region heated part has to be included in at least the second steel material. Furthermore, this two phase temperature region heated part has to have a plurality of the acicular soft phases dispersed in it. Due to this, the effect of the present invention (improvement of joint strength) is obtained.

Note that, whether or not a steel material has a two phase temperature region heated part is determined by the constituents of the steel material and can be judged if viewing a state diagram. In the present invention, for the second steel material, it is necessary to at least select a steel material of a composition enabling formation of a two phase temperature region heated part. On the other hand, the first steel material does not have to be a steel material of a composition enabling formation of a two phase temperature region heated part, so, for example, may be a steel material of a single austenite phase structure.

### Friction Welding Means

The friction welding means used for obtaining the joint of the present invention can employ means known in the field.

One example by which a joint 10 of one of the embodiments of the present invention is obtained will be shown next.

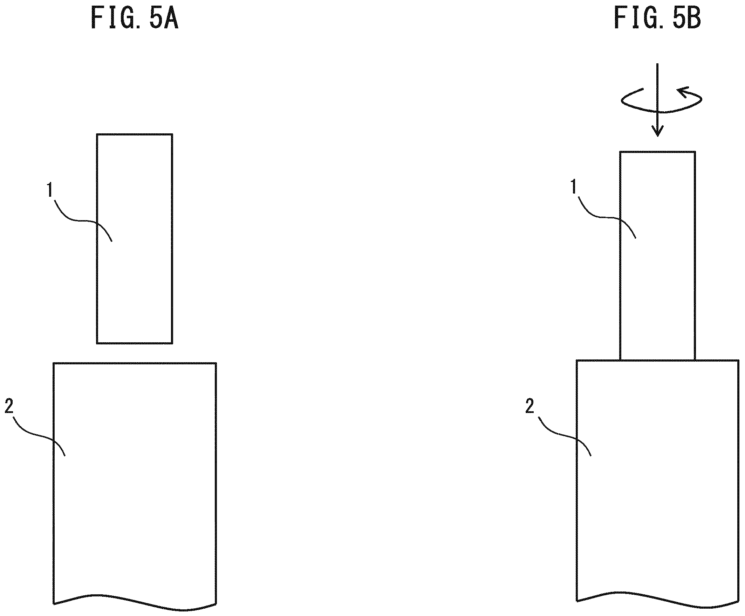

The above-mentioned joint 10, as shown in FIG. 5, can be obtained by arranging a rod-shaped first steel material 1 and a rod-shaped second steel material 2 with an area of a surface to be jointed larger than the first steel material 1 so that the surfaces to be jointed of the two face each other, then the first steel material 1 is made to rotate while pressing it against the second steel material 2 to join the two steel materials by friction welding.

Note that, the method shown in FIG. 5 is one example. In the present invention, either steel material of the first steel material and second steel material may be made to rotate. For example, if the two steel materials of the first steel material and second steel material are rod shaped as shown in the above-mentioned joint 10, either steel material is easily made to rotate.

The pressing force F (kN) when making one steel material (for example, the first steel material) rotate while pressing it against the other steel material (for example, the second steel material) is not particularly limited so long as a pressing force by which the two steel materials can be friction welded. For example, a 5 kN or more pressing force may be mentioned.

Furthermore, the rotational speed (rpm) when making one steel material rotate while pressing it against the other steel material also is not particularly limited so long as a rotational speed by which the two steel materials can be friction welded. For example, a1000 rpm to 8000 rpm rotational speed may be mentioned.

Note that, these pressing force and rotational speed are similar even in a case where one steel material is various shapes other than rod shapes (for example, rivet shaped or other forms).

Further, even in the case where the joint includes a sheet material as the top sheet 3 as in the embodiments shown in the following mentioned FIGS. 8A and 8B, in the same way as the above, it is possible to make one steel material rotate while pressing it against the other steel material to obtain a joint.

Below, the various constituent members used in the joint of the present invention will be explained.

### First Steel Material

In the joint 10 of the above-mentioned embodiment, as the first steel material 1, a rod-shaped steel material having a circular columnar or polygonal columnar shaped shaft part may be illustrated. The shaft part of this rod-shaped steel material preferably has a circular columnar or polygonal columnar shape at least at the part adjoining the jointed part. In this case, in the first steel material, it is sufficient that at least the part adjoining the jointed part be a circular columnar or polygonal columnar shape. The first steel material as a whole may also have a circular columnar or polygonal columnar shape. To stably perform friction welding, the shape of the first steel material is preferably a circular column or pentagonal or greater regular polygonal column.

Note that, in the present invention, the front end of the shaft part of the first steel material before joining (surface to be jointed) preferably has a circular columnar or polygonal columnar shape, so the part adjoining the jointed part of the first steel material after joining need not necessarily have a circular columnar or polygonal columnar shape.

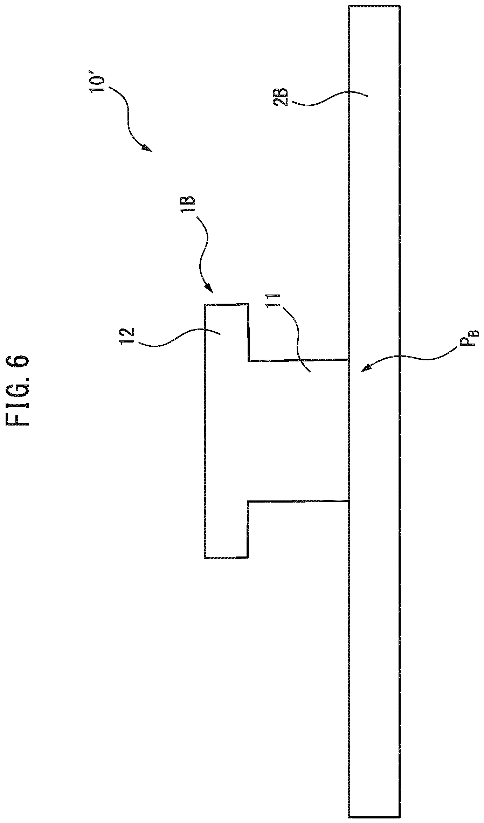

In the present invention, the shape of the first steel material is not limited to such a rod shape. For example, like in the joint 10' of another embodiment of the present invention shown in FIG. 6, a rivet-shaped first steel material 1B having a circular columnar or polygonal columnar shaft part 11 and a head part 12 provided at the upper side end part of the shaft part 11 and with a cross-sectional diameter larger than the shaft part 11 may be used.

That is, for the first steel material, a rod, rivet, etc. generally used as a connecting element in the field can be employed. For example, a solid structure or hollow structure one disclosed in the above-mentioned PTL 1 etc. can be employed.

Note that, in the joint 10' shown in FIG. 6, as the second steel material, a sheet-shaped second steel material 2B (that is, steel sheet) is used.

Further, in the joint 10B of still another embodiment of the present invention shown in FIG. 8B, as the first steel material, a rivet-shaped first steel material 1B is used. Furthermore, at the top surface of the sheet-shaped second steel material 2B (bottom sheet), a sheet material 3 is superposed as the top sheet.

At this joint 10B, the rivet-shaped first steel material 1B has a shaft part 11 extending from the jointed part P_{B} and a head part 12 positioned at the upper side end part of the shaft part 11 and with a cross-sectional diameter larger than the shaft part 11, so the sheet material 3 arranged as the top sheet can be gripped by the head part 12 of the rivet-shaped first steel material 1B and the sheet-shaped second steel material 2B (bottom sheet) and be more securely fastened and more excellent j oint strength can be exhibited as a j oint of the sheet material 3 and sheet-shaped second steel material 2B.

If using such a rivet-shaped steel material as the first steel material, the diameter of the head part is preferably 1.5 times or more the diameter of the shaft part. Further, the length of the shaft part is preferably 1.5 times or more the sheet thickness of the sheet material (top sheet) (in the case of a plurality of top sheets, the total sheet thickness) from the viewpoint of the ease of pressing it against the second steel material (bottom sheet) etc. Here, the diameters of the shaft part and head part mean the diameters of circular shapes if the cross-sectional shapes in directions of the planes perpendicular to the direction of extension of the shaft part are circular shapes and mean the diameters of the circumscribing circles if they are polygonal shapes.

Note that, as the diameter of the shaft part of the first steel material, for example a less than 30 mm diameter may be mentioned.

In the present invention, the first steel material is not limited to the above-mentioned rod-shaped steel material or rivet-shaped steel material so long as able to be jointed with the second steel material by friction welding, but if the first steel material is comprised of a steel material having a circular columnar or polygonal columnar shaft part at least at a part adjoining the jointed part and the second steel material is comprised of a steel material with an area of a surface to be jointed larger than the first steel material (for example, a steel material having a shaft part with a diameter larger than the shaft part of the first steel material, a sheet-shaped steel material with a surface to be jointed which is planar (that is, steel sheet), etc.), at the time of friction welding, a two phase temperature region heated part of the jointed part and a plurality of acicular soft phases dispersed in the same are easily formed at the second steel material and the effect of the present invention is more reliably obtained, so this is particularly advantageous.

Note that, regarding the grade of the first steel material, if steel, the type or strength etc. are not particularly limited.

### Second Steel Material

In the present invention, if the second steel material is a steel material with an area of a surface to be jointed larger than the area of a surface to be jointed of the first steel material and with a two phase temperature region heated part of the steel material formed by friction welding with the first steel material where a plurality of the acicular soft phases can be formed dispersed (for example, the above-mentioned steel material having a structure of mainly bainite etc.), the other requirements are not particularly limited. For example, a rod-shaped steel material having a circular columnar or polygonal columnar shape shaft part, a sheet-shaped steel material (that is, steel sheet), etc. can be suitably used.

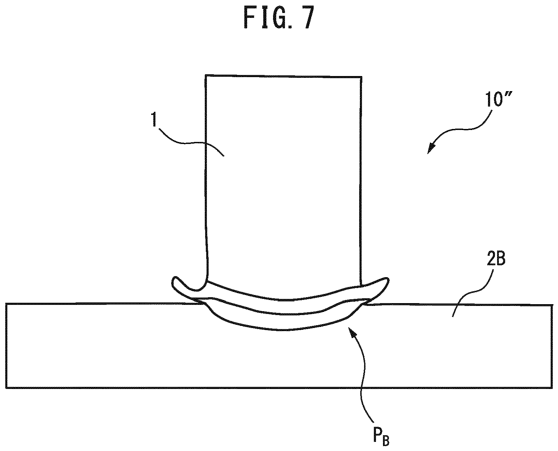

For example, in the joint 10" according to the still other embodiment of the present invention shown in FIG. 7, a rod-shaped first steel material 1 and a sheet-shaped second steel material 2B (steel sheet) are jointed by friction welding. Furthermore, in the embodiments shown in FIGS. 8A and 8B as well, a sheet-shaped second steel material 2B is used as the second steel material.

Further, if both the first steel material and the second steel material are rod-shaped steel materials having shaft parts, the diameter at the surface to be jointed of the shaft part of the second steel material need only be larger than the diameter at the surface to be jointed of the shaft part of the first steel material.

Note that, the areas of the surfaces to be jointed of the first steel material and the second steel material can be calculated by actually measuring the various dimensions of the shapes of the surfaces to be jointed (for example, circular, polygonal, etc.)

Further, if using a sheet material as the top sheet such as in the embodiments shown in FIGS. 8A and 8B, the second steel material is preferably a steel sheet having a tensile strength of that sheet material or more, but if providing the top sheet with a through hole etc. to enable the top sheet to pass through it, the tensile strength of the second steel material may be lower than that sheet material.

The strength of the steel sheet able to be used as the second steel material is not particularly limited, but if using a high strength steel sheet with a tensile strength of 1180 MPa or more (high carbon steel sheet), the joint strength easily falls, so the present invention is particularly advantageous if using such a high strength steel sheet.

Note that, as the second steel material, a sheetd steel sheet, coated steel sheet, or other surface treated steel sheet may also be used.

Further, the steel sheet able to be used as the second steel material need only have a sheet-shaped structure at least at the part to be jointed. The steel sheet as a whole need not have a sheet-shaped structure.

### Sheet material

At each of the joints 10A and 10B of still other embodiments of the present invention shown in FIGS. 8A and 8B, a sheet material 3 is superposed as the top sheet on the top surface of a sheet-shaped second steel material 2B (bottom sheet) and a shaft part of a first steel material 1 or a shaft part 11 of a rivet-shaped first steel material 1B is passed through that sheet material 3 and is jointed with the sheet-shaped second steel material 2B by friction welding. Note that, at the joint 10B shown in FIG. 8B, the sheet material 3 is gripped by the head part 12 of the rivet-shaped first steel material 1B and the second steel material 2.

The sheet material (top sheet) superposed on the top surface of the sheet-shaped second steel material is not particularly limited so long as the first steel material (specifically, the shaft part of the first steel material) can be friction welded with the second steel material. For example, it is possible to use a plastic sheet, metal sheet, etc. Here, as the plastic, for example, CFRP may be mentioned. As the metal sheet, for example, aluminum sheet, aluminum alloy sheet, or other light metal sheet, steel sheet, etc. may be mentioned. An adhesive may be coated between the sheet material and the second steel material or between the plurality of sheet materials. That is, the joint may be further provided with an adhesive arranged between the second steel material and sheet material. Furthermore, when there are two or more sheet materials, the joint may be further provided with an adhesive arranged between the sheet materials.

Furthermore, the second steel material and sheet material may also be jointed by both friction welding and other types of joining means. That is, the joint may further have another joining means joining the sheet material and the second steel material. As the other joining means, one or more types of welded parts selected from the group comprised of a spot welded part, laser welded part, and arc welded part may be illustrated.

Note that, as such a sheet material, a plurality of the same types of or different types of sheet materials may also be used superposed.

The joint of the present invention is excellent in the joint strength of the friction welded part (jointed part) of the first steel material and the second steel material (bottom sheet) even if including such diverse sheet materials (top sheet), so can exhibit excellent joint strength as a joint of the sheet material (top sheet) and the second steel material (bottom sheet).

Note that, if using a steel sheet as the sheet material (top sheet), to enable friction welding of the first steel material and the second steel material (bottom sheet) to be performed more reliably, a steel sheet with a tensile strength lower than the steel sheet of the second steel material forming the bottom sheet is preferably used as the sheet material (top sheet).

Further, at the sheet material as well, it is sufficient that at least the part to be jointed have a sheet-shaped structure. The sheet material as a whole need not have a sheet-shaped structure.

Furthermore, the sheet material may also have a through hole at a location scheduled for the first steel material to be passed through from the viewpoint of the joint strength, joint precision, etc. Note that, if there are a plurality of sheet materials, all of the sheet materials may have such through holes or only some of the sheet materials may have through holes.

Note that, if the sheet material is provided with a through hole, the diameter of the through hole may be larger than or smaller than the shaft part of the first steel material so long as the shaft part of the first steel material can pass through it at the time of friction welding.

For example, in the embodiment shown in FIG. 8A, the joint 10A is comprised of a rod-shaped first steel material 1 having a circular columnar or polygonal columnar shaft part, a sheet-shaped second steel material 2B (bottom sheet), and a sheet material 3 (top sheet) comprised of a plastic sheet or metal sheet. Such a joint 10A has the sheet material 3 superposed on the top surface of the sheet-shaped second steel material 2B, has the rod-shaped first steel material 1 passed through the sheet material 3 from the upper side, and has the bottom side front end part (bottom surface) of the first steel material 1 and the sheet-shaped second steel material 2B jointed by friction welding.

On the other hand, in the embodiment shown in FIG. 8B, the joint 10B is comprised of a rivet-shaped first steel material 1B having a circular columnar or polygonal columnar shaft part 11 and a head part 12 with a cross-sectional diameter larger than the shaft part 11, a sheet-shaped second steel material 2B (bottom sheet), and a sheet material 3 (top sheet) provided with a through hole 31B having a smaller diameter than the shaft part 11 at the location where the shaft part 11 of the rivet-shaped first steel material 1B is passed. Such a joint 10B has the sheet material 3 superposed on the top surface of the sheet-shaped second steel material 2B, has the rivet-shaped first steel material 1B passed through the through hole 31B of the sheet material 3, and has the bottom side front end part (bottom surface) of the shaft part 11 of the rivet-shaped first steel material 1B and the sheet-shaped second steel material 2B jointed by friction welding.

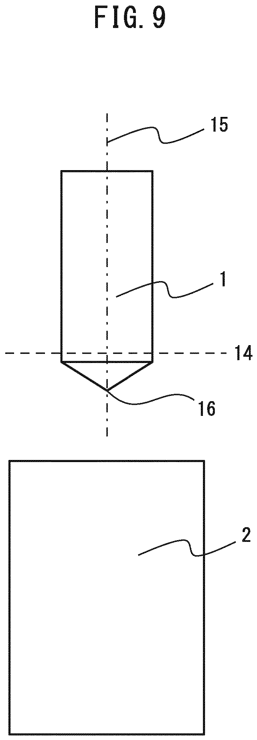

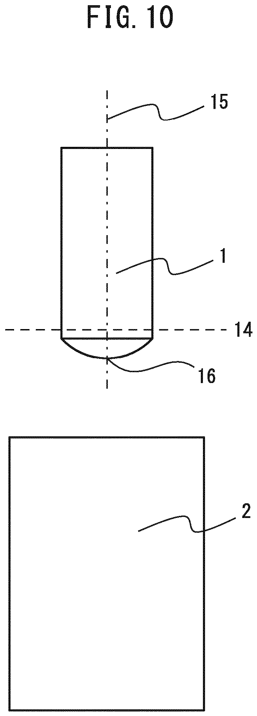

Further, in the present invention, the front ends of the shaft parts of the first steel material and second steel material at the sides of the surfaces to be jointed may have conical shapes or pyramidal shapes or may have curved surfaces such as spherical shapes. Here, FIG. 9 schematically shows, as an example of the first steel material able to be used for the joint of the present invention, a first steel material in the case where the front end of the shaft part at the side of the surface to be jointed is conical shaped, while FIG. 10 schematically shows, as another example of the first steel material, a first steel material in the case where the front end of the shaft part at the side of the surface to be jointed is spherical shaped,

Note that, if the front part of the shaft part at the side of the surface to be jointed of the steel material has such a three-dimensional shape (that is, conical shape or pyramidal shape, spherical shape, or other shape), the "area of a surface to be jointed" indicates the cross-sectional area of the shaft part in the diametrical direction near the shaped part of the front end of the shaft part (cross-sectional area in case of cutting at a position shown by notation 14 near the conical shape part at FIG. 9 and near the spherical shape part at FIG. 10).

Further, if the shape of the front end of the shaft part is such a three-dimensional shape, the position of the vertex 16 of that shape, as shown in FIG. 9 and FIG. 10, is preferably on a center axis 15 of the shaft part. If the position of the vertex is on the center axis 15 of the shaft part, stable heat of friction can be generated and friction welding becomes easier to be performed.

In the joints 10A and 10B of these embodiments as well, the sheet-shaped second steel material 2B with an area of a surface to be jointed larger than the rod-shaped first steel material 1 or the rivet-shaped first steel material 1B has a two phase temperature region heated part P₂ heated to the two phase temperature region at the jointed part P_{B} . Furthermore, at this two phase temperature region heated part P₂ , a plurality of the acicular soft phases P_{F} are dispersed, so in the same way as the above-mentioned joint 10, the local strain concentration is eased and excellent joint strength can be exhibited.

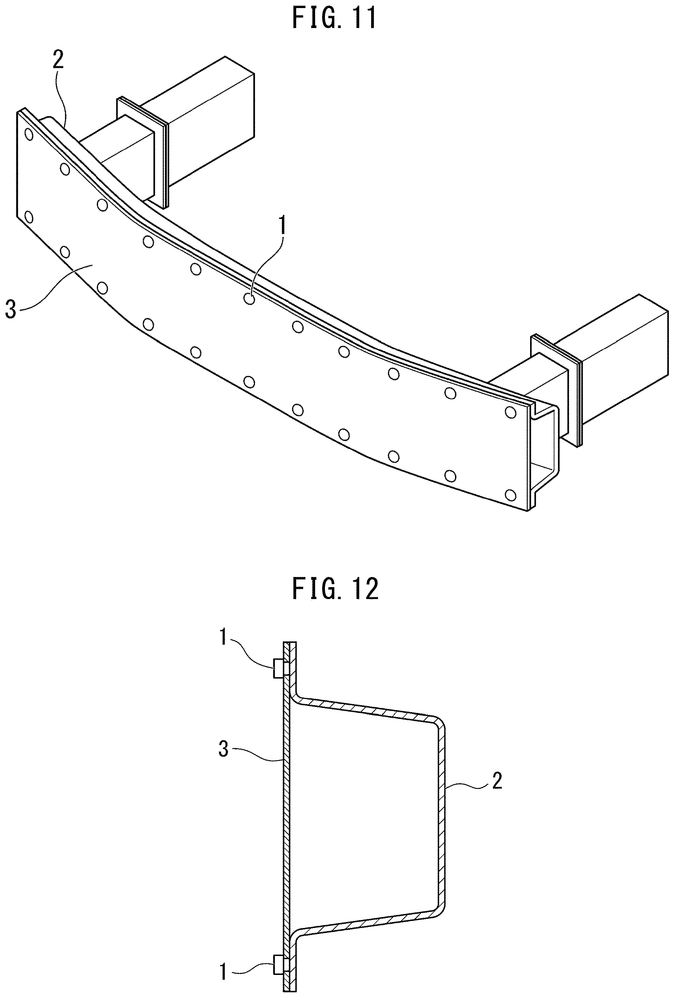

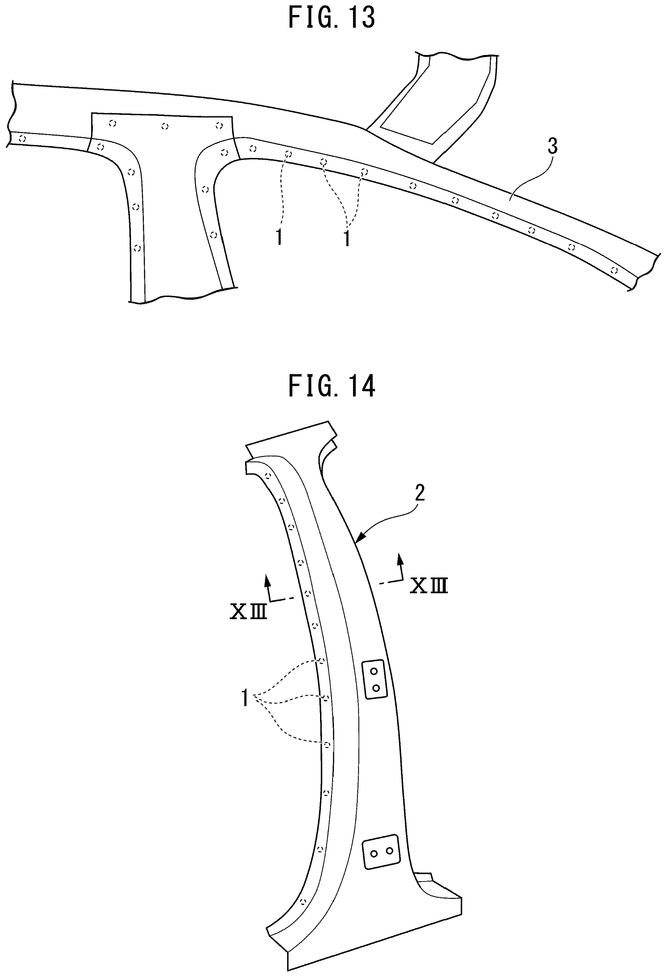

The automobile member according to another aspect of the present invention has welded joints according to the above embodiments. Due to this, the automobile member according to the present embodiment is excellent in joint strength. The type of the automobile member is not particularly limited. As examples according to the present embodiment, a bumper reinforcement (see FIG. 11 and FIG. 12), A pillar (see FIG. 13), B pillar (see FIG. 13 to FIG. 15), or battery case, roof rail, side sill, front side member, rear side member, and tunnel reinforcement may be mentioned. Members forming an automobile floor may also be an automobile member according to the present embodiment.

FIG. 11 and FIG. 12 are a perspective view and cross-sectional view of a bumper reinforcement. The bumper reinforcement is comprised of an outer reinforcement having a flat sheet shape, an inner reinforcement having a hat shape, and a jointed part joining these at a flange part. In the bumper reinforcement according to the present embodiment, the position of the jointed part corresponds to the position of the first steel material 1, the inner reinforcement corresponds to the second steel material 2, and the outer reinforcement corresponds to the sheet material 3. In the bumper reinforcement according to the present embodiment, the first steel material 1 is passed through the outer reinforcement corresponding to the sheet material 3 and is jointed with the inner reinforcement corresponding to the second steel material 2 by friction welding.

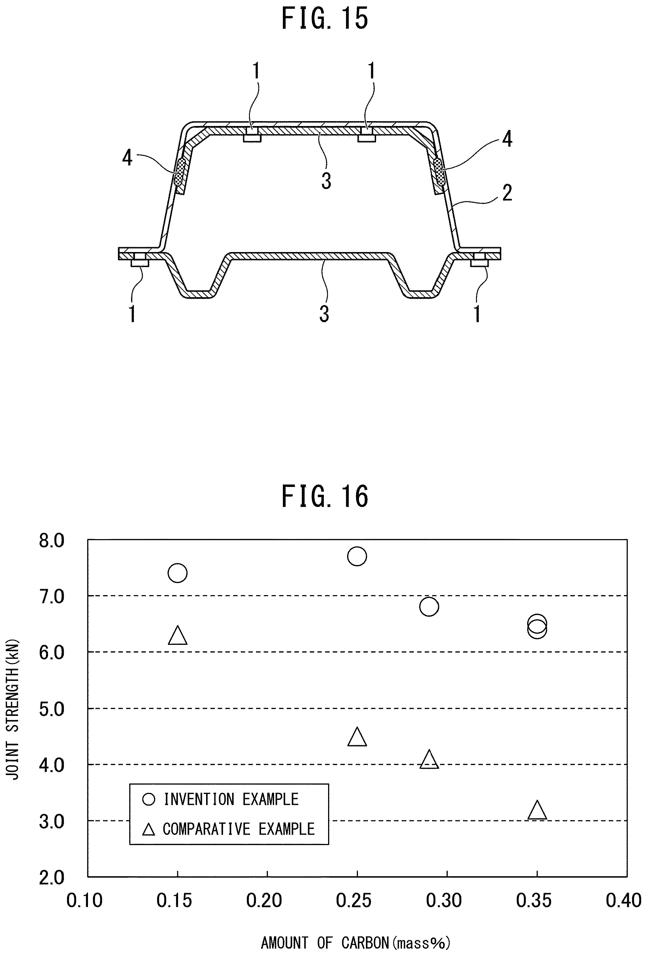

FIG. 13 is a view schematically showing a roof rail, an A pillar, and a B pillar. FIG. 14 is a perspective view showing only the B pillar among these, while FIG. 15 is a XIII-XIII cross-sectional view of the B pillar. The B pillar illustrated in these figures is configured with an inner reinforcement having two projecting parts and an outer reinforcement having a hat shape jointed at a flange part. Further, this B pillar further has a hinge reinforcement arranged along the inner surface of the outer reinforcement and jointed with the outer reinforcement.

The B pillar illustrated at these figures has two jointed parts at the flange part and at the inside part. At the flange part, the position of a jointed part corresponds to a position of a first steel material 1, the outer reinforcement corresponds to a second steel material 2, and the inner reinforcement corresponds to a sheet material 3. At the flange part, a first steel material 1 is passed through the inner reinforcement of the sheet material 3 and is jointed with the outer reinforcement corresponding to the second steel material 2 by friction welding. Further, at the inside part, the position of a jointed part corresponds to a position of the first steel material 1, the outer reinforcement corresponds to a second steel material 2, and the hinge reinforcement corresponds to a sheet material 3. At the flange part, a first steel material 1 is passed through the hinge reinforcement corresponding to the sheet material 3 and is jointed with the outer reinforcement forming the second steel material 2 by friction welding.

Further, the B pillar illustrated in these figures further has spot welded parts 4. In this way, only naturally, there is nothing stopping jointly using structures of the joints according to the present embodiment and spot welded parts.

Note that, the joint and automobile member of the present invention are not limited to the above-mentioned embodiments or the later explained examples etc. and can be suitably combined, substituted, changed, etc. within a range not deviating from the object and gist of the present invention.

### EXAMPLES

Below, invention examples and comparative examples of the present invention will be illustrated to explain the present invention more concretely, but the present invention is not limited to only such invention examples.

As the first steel materials, 1000 MPa class steel rods (diameters 4.5 mm, lengths 7 mm) were used. As the second steel materials, steel sheets with the different amounts of carbon shown in the following Table 1 (sheet thicknesses of all 1.6 mm) were used. Friction welding was used to join the first steel materials and the second steel materials to form the joints of Invention Examples 1 to 5 and Comparative Examples 1 to 4 of the present invention.

Note that, the main structures of the steel sheets used as the second steel materials were formed in the following way.

Mainly bainite structures were formed by heating the steel sheets to 900°C, then cooling down to a temperature enabling bainite transformation (about 400°C) and further holding at that temperature for 500 seconds, then rapidly cooling.

Further, mainly martensite structures were formed by heating the steel sheets to 900°C, then rapidly cooling by in-mold cooling.

Furthermore, structures of mainly martensite+ferrite (structures of mainly structures of the total of two phases of martensite and ferrite) were formed by heating cold rolled steel sheets to the two phase temperature region of ferrite and austenite, then rapidly cooling by in-mold cooling. These mainly martensite+ferrite structures were examined in cross-section by a scanning electron microscope. The area ratio of the martensite was found and this was used as the martensite fraction.

The fabricated joints of Invention Examples 1 to 5 and Comparative Examples 1 to 4 were used to verify the relationship of the shapes of the soft phases (ferrite phases) and the joint strength.

Note that, the conditions of the friction welding were in each case made a rotational speed of 7000 rpm, a pressing force of 7 kN, and upset length of 1.5 mm.

The shapes of the soft phases of a two phase temperature region heated part at a jointed part of the second steel material of a joint, as shown in FIG. 4, are judged by calculating the above aspect ratios (long side/short side) using a scanning electron microscope at the measurements points P_{0 . 1} , P_{0 . 3} , P₀ . ₅, P_{0 . 7} , and P_{0 . 9} of five locations inside the two phase temperature region heated part on extension lines extending in the axial direction of the steel rod (first steel material) from positions corresponding to five types of predetermined widths, 0.45 mm (=0.1d), 1.35 mm (=0.3d), 2.25 mm (=0.5d), 3.15 mm (=0.7d), and 4.05 mm (=0.9d), with respect to the diameter of the rod (width "d" of first steel material=4.5 mm) at the cross-section of the jointed part of the joint. Further, the average aspect ratios of the measurement locations were calculated. If the average aspect ratios were 4.0 or more at the measurement points of three or more locations, the "shape of soft phases" shown in Table 1 was deemed "acicular". On the other hand, if the average aspect ratios at three or more measurement points were less than 4.0, it was deemed "nonacicular". Note that, a soft phase for which the aspect ratio is calculated is made a soft phase with a rectangle circumscribing the outer edge lines of the cross-sectional shape of the soft phase having a length of the long sides of 1 µm or more. Further, a soft phase contacting the outer edges of the observed field is excluded from measurement.

Further, the results of measurement of the average aspect ratios of the soft phases at the measurement points of the above five locations and the numbers of soft phases for calculation of the average aspect ratios at the measurement points of the above five locations are shown in Table 1. Furthermore, the average values of the above average aspect ratios at the measurement points of the five locations and the average values of the numbers of soft phases at the measurement points of the five locations are shown in Table 1.

Further, for the joint strengths of the joints, the joint strengths were measured using the joints prepared by the same steel sheets as the steel sheets used in the above Invention Examples 1 to 5 and Comparative Examples 1 to 4 and the same joining conditions. Specifically, for the joint strengths of the joints, the maximum loads (kN) when pulling apart the jointed rods in the direction vertical from the steel sheet to cause the jointed parts to break were measured.

Note that, the results of measurement of the amounts of carbon, shapes of soft phases, and joint strengths of the steel sheets are as shown in the following Table 1.

### [Table 1]

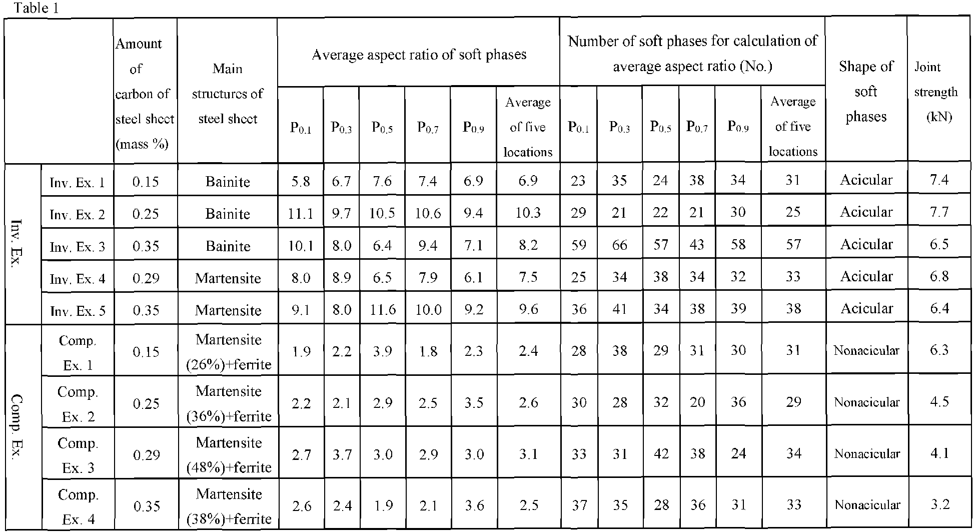

FIG. 16 shows the relationship between the amount of carbon and the joint strength. As shown in FIG. 16, if comparing the invention examples and comparative examples at the same amounts of carbon, in welded joints of the invention examples with "acicular" shapes of soft phases at the two phase temperature region heated parts of the jointed parts of the steel sheets (second steel materials) and with average aspect ratios of 4.0 or more, higher joint strengths were exhibited compared with joints of the comparative examples with the same amounts of carbon and "nonacicular" shapes of soft phases.

### INDUSTRIAL APPLICABILITY

According to the present invention, in a joint comprised of a plurality of steel materials jointed by friction welding, excellent joint strength can be obtained, so, for example, application to the manufacture of various structural parts such as body parts of automobiles or structures of buildings is possible.

Therefore, the present invention has a high applicability in industry.

### REFERENCE SIGNS LIST

1. first steel material
2. second steel material
3. sheet material
4. spot welded part
P_{B} . jointed part
P₁ . quenched part
P₂ . two phase temperature region heated part
P₃ . tempered part
P_{F} . acicular soft phase

## Claims

1. A joint (10) comprising two or more steel materials including a first steel material (1) and a second steel material (2) jointed together,
the first steel material (1) and the second steel material (2) being jointed by friction welding,
the second steel material (2) having an area of a surface to be jointed larger than the area of a surface to be jointed of the first steel material (1), the jointed part (P_{B}) of the second steel material having a two phase temperature region heated part (P₂), **characterized in that** the second steel material (2) other than the jointed part (P_{B}) comprises an amount of carbon of 0.27 mass% or more and is comprised of mainly one or both of martensite and tempered martensite,
the two phase temperature region heated part (P₂) having a plurality of the acicular soft phases (P_{F}) dispersed in the two phase temperature region heated part (P₂), the acicular soft phases (P_{F}) having an average aspect ratio of a long side and short side of 4.0 or more.

2. The joint according to claim 1, wherein the plurality of the acicular soft phases (P_{F}) are dispersed in the two phase temperature region heated part (P₂) as a whole.

3. The joint according to claim 1 or 2, wherein the structures of the parts other than the jointed part of the second steel material (2) include one or more structures selected from bainite, tempered bainite, martensite, and tempered martensite in a total of 60% or more.

4. The joint according to any one of claims 1 to 3, wherein the second steel material (2) is a steel sheet.

5. The joint according to claim 4, wherein
a top surface of the second steel material (2) being the steel sheet has at least one sheet material of a plastic sheet and a metal sheet superposed on the top surface and
the first steel material (1) is passed through the sheet material to be jointed with the second steel material (2) by friction welding.

6. The joint according to claim 5, wherein
the first steel material has a head part with a larger cross-sectional diameter than a shaft part at an end part at an opposite side from the jointed part and
the sheet material is gripped between the second steel material (2) and the head part of the first steel material.

7. The joint according to claim 5 or 6, wherein
the joint comprises an adhesive arranged between the second steel material (2) and the sheet material.

8. The joint according to any one of claims 5 to 7, wherein
the joint comprises two or more sheet materials and an adhesive arranged between the sheet materials.

9. The joint according to any one of claims 5 to 8, wherein
the joint comprises one or more welded parts selected from a group consisting of a spot welded part, laser welded part, and arc welded part joining the sheet material and the second steel material (2).

10. The joint according to any one of claims 1 to 9, wherein the second steel material (2) is a tensile strength 1180 MPa or more steel sheet.

11. The joint according to any one of claims 1 to 10, wherein the acicular soft phases (P_{F}) have an average aspect ratio of a long side and short side of 5.0 or more.

12. An automobile member having the joint according to any one of claims 1 to 11.

13. The automobile member according to claim 12, wherein the automobile member is a bumper reinforcement, A pillar, B pillar, roof rail, side sill, front side member, rear side member, tunnel reinforcement, battery case, or member constituting an automobile floor.

## Patentansprüche

1. Verbindung (10), die zwei oder mehr Stahlwerkstoffe aufweist, darunter einen ersten Stahlwerkstoff (1) und einen zweiten Stahlwerkstoff (2), die miteinander verbunden sind, wobei der erste Stahlwerkstoff (1) und der zweite Stahlwerkstoff (2) durch Reibungsschweißen verbunden sind,
wobei der zweite Stahlwerkstoff (2) eine Fläche einer zu verbindenden Oberfläche aufweist, die größer ist als die Fläche einer zu verbindenden Oberfläche des ersten Stahlwerkstoffs (1), wobei der verbundene Teil (P_{B}) des zweiten Stahlwerkstoffs ein in einem Zweiphasentemperaturbereich erhitztes Teil (P₂) aufweist, **dadurch gekennzeichnet, dass** der zweite Stahlwerkstoff (2) außer dem verbundenen Teil (P_{B}) eine Kohlenstoffmenge von 0,27 Massenprozent oder mehr aufweist und hauptsächlich entweder aus Martensit oder aus gehärtetem Martensit oder aus beiden besteht,
wobei das in dem Zweiphasentemperaturbereich erhitzte Teil (P₂) mehrere der feinnadeligen Weichphasen (P_{F}) aufweist, die in dem in dem Zweiphasentemperaturbereich erhitzten Teil (P₂) dispergiert sind, wobei die feinnadeligen Weichphasen (P_{F}) ein durchschnittliches Seitenverhältnis einer langen Seite zu einer kurzen Seite von 4,0 oder mehr aufweisen.

2. Verbindung nach Anspruch 1, wobei die mehreren feinnadeligen Weichphasen (P_{F}) in dem in dem Zweiphasentemperaturbereich erhitzten Teil (P2) insgesamt dispergiert sind.

3. Verbindung nach Anspruch 1 oder 2, wobei die Strukturen der Teile außer dem verbundenen Teil des zweiten Stahlwerkstoffs (2) eine oder mehrere Strukturen aufweisen, die zu insgesamt 60 % oder mehr aus Bainit, gehärtetem Bainit, Martensit und gehärtetem Martensit ausgewählt sind.

4. Verbindung nach einem der Ansprüche 1 bis 3, wobei der zweite Stahlwerkstoff (2) ein Stahlblech ist.

5. Verbindung nach Anspruch 4, wobei
eine Oberseite des zweiten Stahlwerkstoffs (2) das Stahlblech ist, das mindestens ein Blechmaterial aus einem Kunststoffblech und einem Metallblech aufweist, die auf die Oberseite aufgebracht sind, und
der erste Stahlwerkstoff (1) durch das Blechmaterial hindurchgeführt und durch Reibungsschweißen mit dem zweiten Stahlwerkstoff (2) verbunden wird.

6. Verbindung nach Anspruch 5, wobei
der erste Stahlwerkstoff (1) ein Kopfteil mit einem größeren Querschnittsdurchmesser als ein Schaftteil an einem Endteil auf einer dem verbundenen Teil gegenüberliegenden Seite aufweist, und
das Blechmaterial zwischen dem zweiten Stahlwerkstoff (2) und dem Kopfteil des ersten Stahlwerkstoffs ergriffen wird.

7. Verbindung nach Anspruch 5 oder 6, wobei
die Verbindung einen Klebstoff aufweist, der zwischen dem zweiten Stahlwerkstoff (2) und dem Blechmaterial angeordnet ist.

8. Verbindung nach einem der Ansprüche 5 bis 7, wobei
die Verbindung aus zwei oder mehr Blechmaterialien und einem zwischen den Blechmaterialien angeordneten Klebstoff besteht.

9. Verbindung nach einem der Ansprüche 5 bis 8, wobei die Verbindung ein oder mehrere geschweißte Teile aufweist, die aus einer Gruppe bestehend aus einem punktgeschweißten Teil, einem lasergeschweißten Teil und einem lichtbogengeschweißten Teil ausgewählt sind, die das Blechmaterial und den zweiten Stahlwerkstoff (2) miteinander verbinden.

10. Verbindung nach einem der Ansprüche 1 bis 9, wobei der zweite Stahlwerkstoff (2) ein Stahlblech mit einer Zugfestigkeit von 1180 MPa oder mehr ist.

11. Verbindung nach einem der Ansprüche 1 bis 10, wobei die feinnadeligen Weichphasen (PF) ein durchschnittliches Seitenverhältnis einer langen Seite zu einer kurzen Seite von 5,0 oder mehr aufweisen.

12. Kraftfahrzeugelement, das die Verbindung nach einem der Ansprüche 1 bis 11 aufweist.

13. Kraftfahrzeugelement nach Anspruch 12, wobei das Kraftfahrzeugelement eine Stoßfängerverstärkung, eine A-Säule, eine B-Säule, einen Dachträger, einen Seitenschweller, ein vorderes Seitenelement, ein hinteres Seitenelement, eine Tunnelverstärkung, ein Batteriegehäuse oder ein Element ist, das einen Kraftfahrzeugboden darstellt.

## Revendications

1. Jointure (10) comprenant deux ou plus de deux matériaux en acier incluant un premier matériau en acier (1) et un deuxième matériau en acier (2) raccordés ensemble,
le premier matériau en acier (1) et le deuxième matériau en acier (2) étant raccordés par soudage par friction,
le deuxième matériau en acier (2) ayant la superficie d'une surface devant être raccordée plus grande que la superficie d'une surface devant être raccordée du premier matériau en acier (1), la partie raccordée (P_{B}) du deuxième matériau en acier ayant une partie chauffée à la région de température biphasique (P₂), **caractérisé en ce que**
le deuxième matériau en acier (2) autre que la partie raccordée (P_{B}) comprend une quantité de carbone de 0,27 % en masse ou plus et est constitué principalement de l'un ou des deux parmi la martensite et la martensite revenue,
la partie chauffée à la région de température biphasique (P₂) ayant une pluralité de phases douces aciculaires (P_{F}) dispersée dans la partie chauffée à la région de température biphasique (P₂), les phases douces aciculaires (P_{F}) ayant un rapport d'aspect moyen du côté long au côté court de 4,0 ou plus.

2. Jointure selon la revendication 1, dans laquelle la pluralité de phases douces aciculaires (P_{F}) est dispersée dans la partie chauffée à la région de température biphasique (P₂) dans sa totalité.

3. Jointure selon la revendication 1 ou 2, dans laquelle les structures des parties autres que la partie raccordée du deuxième matériau en acier (2) incluent une ou plusieurs structures choisies parmi la bainite, la bainite revenue, la martensite, et la martensite revenue en un total de 60 % ou plus.

4. Jointure selon l'une quelconque des revendications 1 à 3, dans laquelle le deuxième matériau en acier (2) est une tôle d'acier.

5. Jointure selon la revendication 4, dans laquelle
la surface supérieure du deuxième matériau en acier (2) qui est la tôle d'acier a au moins un matériau de tôle parmi une tôle plastique et une tôle métallique qui est superposé sur la surface supérieure, et
le premier matériau en acier (1) traverse le matériau de tôle pour être raccordé au deuxième matériau en acier (2) par soudage par friction.

6. Jointure selon la revendication 5, dans laquelle
le premier matériau en acier a une partie de tête ayant un diamètre en coupe transversale supérieur à celui d'une partie d'arbre au niveau d'une partie d'extrémité sur un côté opposé à la partie raccordée et
le matériau de tôle est serré entre le deuxième matériau en acier (2) et la partie de tête du premier matériau en acier.

7. Jointure selon la revendication 5 ou 6, dans laquelle
la jointure comprend un adhésif disposé entre le deuxième matériau en acier (2) et le matériau de tôle.

8. Jointure selon l'une quelconque des revendications 5 à 7, dans laquelle
la jointure comprend deux ou plus de deux matériaux de tôle et un adhésif disposé entre les matériaux de tôle.

9. Jointure selon l'une quelconque des revendications 5 à 8, dans laquelle
la jointure comprend une ou plusieurs parties soudées choisies dans le groupe constitué par une partie soudée par points, une partie soudée au laser, et une partie soudée à l'arc, joignant le matériau de tôle et le deuxième matériau en acier (2).

10. Jointure selon l'une quelconque des revendications 1 à 9, dans laquelle le deuxième matériau en acier (2) est une tôle d'acier ayant une résistance à la traction de 1180 MPa ou plus.

11. Jointure selon l'une quelconque des revendications 1 à 10, dans laquelle les phases douces aciculaires (P_{F}) ont un rapport d'aspect moyen du côté long au côté court de 5,0 ou plus.

12. Elément d'automobile ayant la jointure de l'une quelconque des revendications 1 à 11.

13. Elément d'automobile selon la revendication 12, dans lequel l'élément d'automobile est un renfort de parechoc, un pilier A, un pilier B, un longeron de toit, un longeron, un élément latéral avant, un élément latéral arrière, un renfort de tunnel, un carter de batterie, ou un élément constituant un plancher d'automobile.
